# EUROPEAN PATENT APPLICATION

(11) **EP 4 369 830 A1**
(43) Date of publication of application: **15.05.2024**
(21) Application number: 21949342.6
(22) Date of filing: 08.07.2021
(51) Int. Cl.: H04W 72/12, H04W 28/06, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: YOSHIOKA, Shohei, Tokyo 100-6150 (JP); MATSUMURA, Yuki, Tokyo 100-6150 (JP); KURITA, Daisuke, Tokyo 100-6150 (JP); KUMAGAI, Shinya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/025822
(87) International publication number: WO 2023/281709

(57) **Abstract**

A terminal according to one aspect of the present disclosure includes a receiving section that receives a Radio Resource Control (RRC) information element related to a structure of frequency and time in a duplex method of performing frequency division multiplexing of an uplink (UL) resource and a downlink (DL) resource in one or more component carriers in a band of time division duplex (TDD), and receives downlink control information including a field related to an indication of a transmission direction in the structure, and a control section that determines at least one of configuration of the DL resource and the UL resource to be multiplexed by frequency division multiplexing and configuration of only the DL resource, based on the field, regarding a period available for a DL and a UL configured based on the RRC information element. According to one aspect of the present disclosure, use efficiency of resources can be enhanced.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), it is assumed that a plurality of user terminals (User Equipments (UEs)) perform communication under an environment of ultra-high density and high traffic.

Under such an environment, it is assumed that uplink (UL) resources run short, in comparison to downlink (DL) resources.

However, in NR specifications so far, a study on a method of increasing uplink resources has not been fully carried out. Unless the method can be appropriately controlled, this may cause impairment of system performance, such as increase in delay and impairment of coverage performance.

In view of this, the present disclosure has one object to provide a terminal, a radio communication method, and a base station for enhancing use efficiency of resources.

### Solution to Problem

A terminal according to one aspect of the present disclosure includes a receiving section that receives a Radio Resource Control (RRC) information element related to a structure of frequency and time in a duplex method of performing frequency division multiplexing of an uplink (UL) resource and a downlink (DL) resource in one or more component carriers in a band of time division duplex (TDD), and receives downlink control information including a field related to an indication of a transmission direction in the structure, and a control section that determines at least one of configuration of the DL resource and the UL resource to be multiplexed by frequency division multiplexing and configuration of only the DL resource, based on the field, regarding a period available for a DL and a UL configured based on the RRC information element.

### Advantageous Effects of Invention

According to one aspect of the present disclosure, use efficiency of resources can be enhanced.

### Brief Description of Drawings

[FIG. 1] FIGS. 1A and 1B are diagrams to show examples of configuration of a slot structure.
[FIG. 2] FIG. 2 is a diagram to show an example of a structure of XDD.
[FIG. 3] FIGS. 3A and 3B are diagrams to show examples of configuration of resources in a time domain and a frequency domain for XDD operation.
[FIG. 4] FIG. 4 is a diagram to show an example of resources available for UL transmission according to a first embodiment.
[FIG. 5] FIG. 5 is a diagram to show an example of an XDD structure according to a variation of the first embodiment.
[FIG. 6] FIG. 6 is a diagram to show an example of configuration/indication of the XDD structure according to a second embodiment.
[FIG. 7] FIG. 7 is a diagram to show another example of configuration/indication of the XDD structure according to the second embodiment.
[FIG. 8] FIG. 8 is a diagram to show another example of configuration/indication of the XDD structure according to the second embodiment.
[FIG. 9] FIGS. 9A and 9B are diagrams to show examples of UL transmission according to Embodiment 3-2.
[FIG. 10] FIG. 10 is a diagram to show an example of a slot format.
[FIG. 11] FIG. 11 is a diagram to show an example of an association between slot formats and transmission directions corresponding to symbol numbers in a slot.
[FIG. 12] FIG. 12 is a diagram to show an example of a schematic structure of a radio communication system according to one embodiment.
[FIG. 13] FIG. 13 is a diagram to show an example of a structure of a base station according to one embodiment.
[FIG. 14] FIG. 14 is a diagram to show an example of a structure of a user terminal according to one embodiment.
[FIG. 15] FIG. 15 is a diagram to show an example of a hardware structure of the base station and the user terminal according to one embodiment.

### Description of Embodiments

### (TDD Configuration)

In Rel. 15, for the UE, configuration of a UL and a DL (UL resources and DL resources) in time division duplex (TDD) is performed. The UE may receive a higher layer parameter (TDD-UL-DL-ConfigCommon) related to cell-dedicated UL/DL TDD configuration or a higher layer parameter (TDD-UL-DL-ConfigDedicated) related to UE-dedicated UL/DL TDD configuration.

The higher layer parameter (TDD-UL-DL-ConfigCommon) related to cell-dedicated UL/DL TDD configuration includes a parameter (referenceSubcarrierSpacing) for configuring a reference subcarrier spacing and a parameter (TDD-UL-DL-Pattern) related to UL and DL patterns of TDD.

TDD-UL-DL-Pattern includes a parameter (dl-UL-TransmissionPeriodicity) for configuring a period of the DL-UL patterns, a parameter (nrofDownlinkSlots) for configuring the number of consecutive DL slots, a parameter (nrofDownlinkSymbols) for configuring the number of consecutive DL symbols, a parameter (nrofUplinkSlots) for configuring the number of consecutive UL slots, and a parameter (nrofUplinkSymbols) for configuring the number of consecutive UL symbols.

With the higher layer parameter (TDD-UL-DL-ConfigDedicated) related to the UE-dedicated UL/DL TDD configuration, configuration of slots and configuration of slot indexes are performed.

The configuration of slots is performed with a parameter TDD-UL-DL-SlotConfig. TDD-UL-DL-SlotConfig includes a parameter (TDD-UL-DL-SlotIndex) related to slot indexes and a parameter (symbols) related to symbols constituting each slot. The parameter (symbols) related to symbols constituting each slot configures one of a parameter (allDownlink) indicating that the symbols constituting the slot are all used for the DL, a parameter (allUplink) indicating that the symbols constituting the slot are all used for the UL, or a parameter (explicit) explicitly indicating the number of symbols.

The parameter (explicit) explicitly indicating the number of symbols includes a parameter (nrofDownlinkSymbols) for configuring the number of DL symbols and a parameter (nrofUplinkSymbols) for configuring the number of UL symbols.

The UE determines the slot/symbol to be used for at least one of transmission of a UL signal/channel and reception of a DL signal/channel, based on the parameters described above.

### (XDD)

LTE of Rel. 14 and previous versions has been put into practical use mainly for frequency division duplex (FDD) while also supporting time division duplex (TDD).

In contrast, NR of Rel. 15 and later versions has been studied mainly for TDD while supporting FDD at the same time (for example, LTE band migration and the like).

In FDD, this is preferable from the viewpoint of reduction of delay because DL reception and UL transmission can be performed simultaneously. In contrast, in FDD, the ratio between DL and UL resources is fixed (for example, 1:1).

In TDD, the ratio between DL and UL resources can be changed. For example, in a general environment where DL traffic is relatively heavy, the DL resource amount can be increased to improve DL throughput.

In contrast, in consideration of a time ratio (for example, DL:UL = 4:1) of transmission and reception in TDD in Rel. 16 or previous versions, a case with fewer transmission occasions of a UL signal/channel than reception occasions of a DL signal/channel is conceivable. In such a case, there is a concern that the UE cannot perform frequent transmission of a UL signal/channel, which delays transmission of an important UL signal/channel. It is also concerned that, since there are fewer UL transmission occasions than DL reception occasions, signals/channels are congested in the UL transmission occasions. In addition, in TDD, time resources in which a UL signal/channel can be transmitted are restricted. Hence, for example, application of a UL coverage enhancement technique using repetition transmission (Repetition) is also restricted.

For future radio communication systems (for example, Rel. 17/18 or later versions), it is studied to introduce a division duplex method combining TDD and frequency division duplex (FDD) for UL and DL.

The division duplex method may be referred to as an XDD (Cross Division Duplex). XDD may mean a duplex method in which DL and UL are frequency-division-multiplexed (DL and UL can be used simultaneously) in one component carrier (CC) or a plurality of CCs of a TDD band. XDD may mean that, when the duplex method is employed for a plurality of CCs, UL is available, in time resources where DL is available in a certain CC, in another CC. The plurality of CCs may be CCs in the same band.

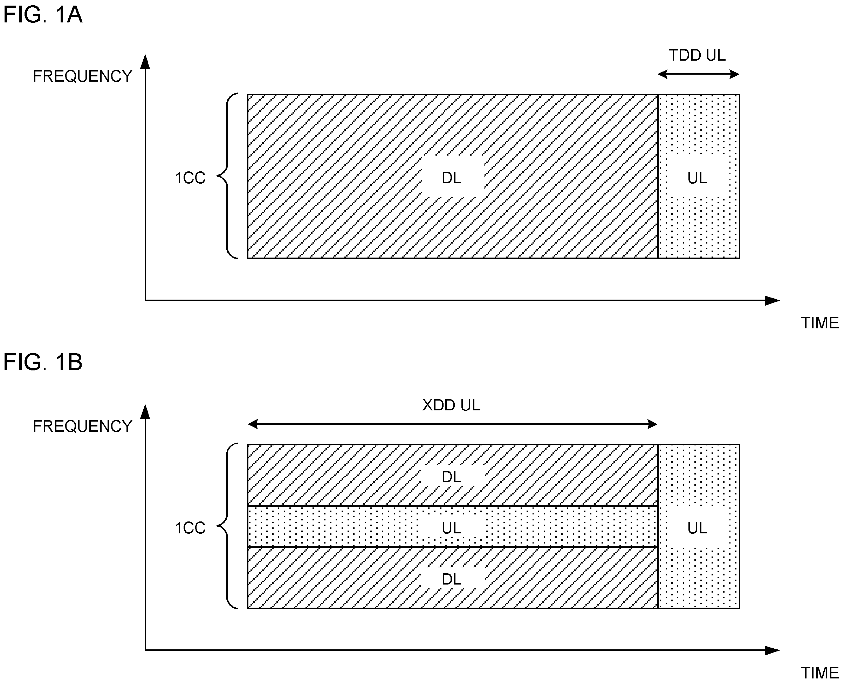

FIG. 1A is a diagram to show an example of a configuration of TDD defined in Rel. 16 or previous versions. In the example shown in FIG. 1A, TDD slots/symbols are configured for a UE in the bandwidth of one component carrier (CC) (which may be referred to as a cell and a serving cell) .

In the example shown in FIG. 1A, the time ratio between a DL slot and a UL slot is 4:1. In such an existing slot/symbol configuration in TDD, UL time resources cannot be sufficiently secured, which may cause UL transmission delay and degrade coverage performance.

FIG. 1B is a diagram to show an example of a structure of XDD. In the example of FIG. 1B, resources used for DL reception and resources used for UL transmission overlap in terms of time in one component carrier (CC). With such a structure of resources, it is possible to secure UL resources and consequently improve use efficiency of resources.

For example, as in the example shown in FIG. 1B, by configuring both end resources of the frequency domain in one CC for DL to sandwich UL resources between the DL resources, occurrence of cross link interference (CLI) with neighbor carriers can be prevented and mitigated. A region for guard may be configured at one or more borders between the DL resources and UL resources.

By considering complexity of processing of self-interference, it is conceivable that only a base station uses DL resources and UL resources simultaneously. In other words, it may be configured that a certain UE uses DL resources while another UE uses UL resources in resources where DL and UL overlap in terms of time.

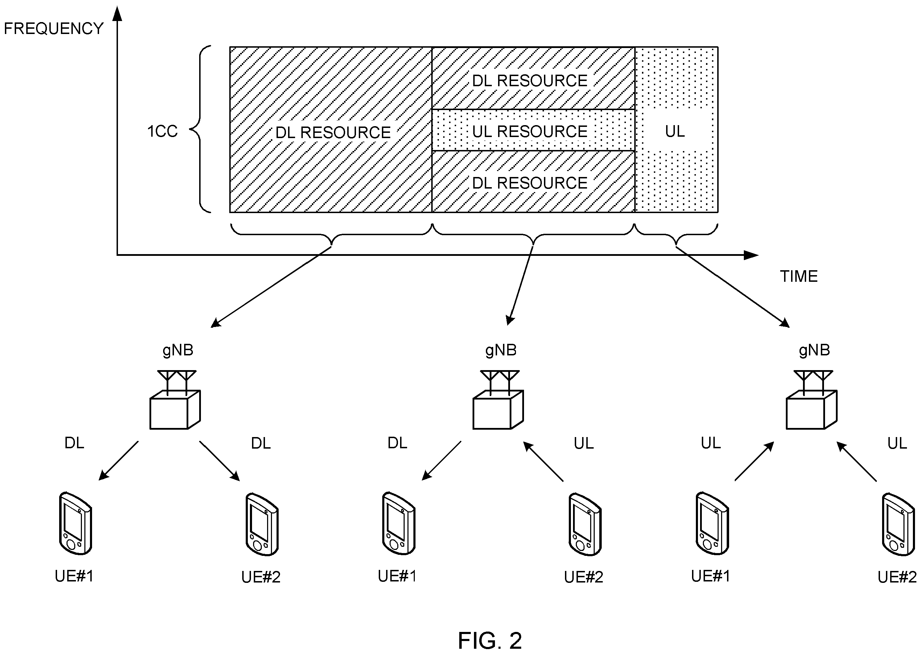

FIG. 2 is a diagram to show an example of a structure of XDD. In the example shown in FIG. 2, it is configured that part of DL resources in a TDD band is allocated as UL resources so that DL and UL partially overlap in terms of time.

In the example shown in FIG. 2, in a period for only DL, each of a plurality of UEs (UE #1 and UE #2 in FIG. 2) receives a DL channel/signal.

In the period where DL and UL overlap in terms of time, a certain UE (UE #1 in the example of FIG. 2) receives a DL channel/signal while another UE (UE #2 in the example of FIG. 2) transmits a UL channel/signal. In this period, a base station performs simultaneous transmission and reception of DL and UL.

Moreover, in a period for UL only, each of a plurality of UEs transmits a UL channel/signal.

In existing NR (for example, those defined in Rel. 15/16 or previous versions), DL frequency resources and UL frequency resources in a carrier for UEs are configured as a DL bandwidth part (BWP) and a UL BWP, respectively. To switch DL/UL frequency resources to other DL/UL frequency resources, a configuration of a plurality of BWPs and a mechanism of adaptation of BWPs are needed.

In existing NR, time resources in a TDD carrier for UEs are configured as at least one of DL, UL, and flexible (FL) in a TDD configuration.

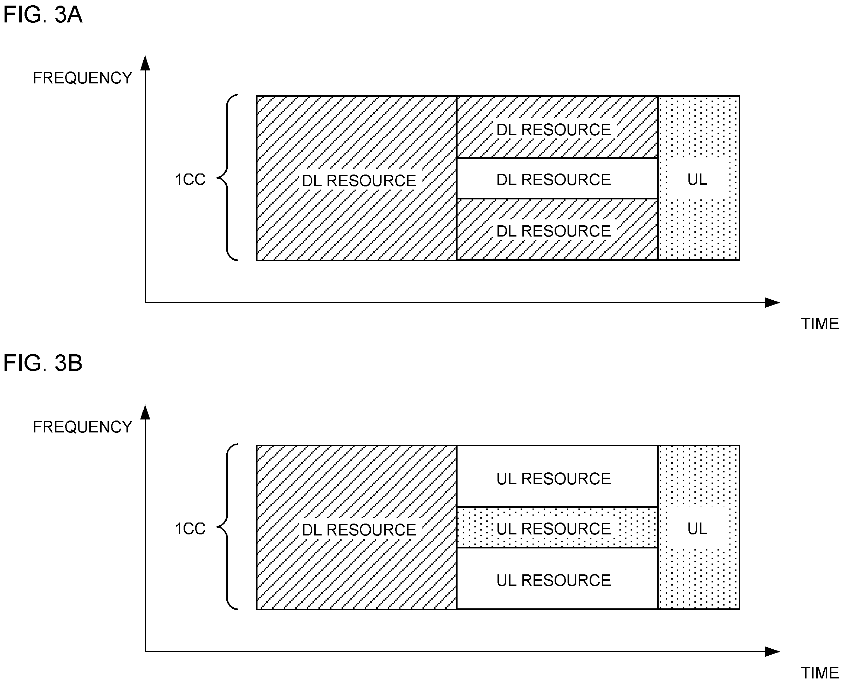

A method of configuring resources in the time domain and the frequency domain for XDD operation has been studied. For example, for UE #1 of FIG. 2, by configuring resources of XDD (a period in which the DL and the UL overlap) similarly to existing DL resources (while avoiding use of a part of UL resources through use of frequency domain resource allocation (FDRA), for example), influence on specifications/UE can be minimized (see FIG. 3A).

For example, for UE #2 of FIG. 2, by configuring resources of XDD similarly to existing UL resources (while avoiding use of a part of DL resources through use of frequency domain resource allocation (FDRA), for example), influence on specifications/UE can be minimized (see FIG. 3B) .

Incidentally, in the XDD structure described above, it is necessary to prevent a case in which UL transmission is performed in DL resources. For example, when UL transmission is performed in DL resources, this may adversely affect (Out of Band Emission) other operators using neighboring bands.

However, a study on a specific method for preventing the case in which UL transmission is performed in DL resources has not been fully carried out. Unless the study is fully carried out, system performance may be significantly impaired.

In view of this, the inventors of the present invention came up with the idea of a method of preventing the UE from performing UL transmission in DL resources even in a case in which the UE fails to implement an indication from a base station, for example.

Embodiments according to the present disclosure will be described in detail with reference to the drawings as follows. The radio communication methods according to respective embodiments may each be employed individually, or may be employed in combination.

### (Radio Communication Method)

The UL signal/channel in the present disclosure may be, for example, at least one of an uplink control channel (for example, a PUCCH), an uplink shared channel (for example, a PUSCH), a sounding reference signal (for example, a sounding reference signal (SRS)), a random access channel (for example, a PRACH), a sidelink control channel (for example, a physical sidelink control channel PSCCH)), a sidelink shared channel (for example, a physical sidelink shared channel (PSSCH)), a sidelink feedback channel (for example, a physical sidelink feedback channel (PSFCH)), a sidelink synchronization signal (for example, a sidelink primary synchronization signal (S-PSS) or a sidelink secondary synchronization signal (S-SSS)), and a sidelink broadcast channel (for example, a physical sidelink broadcast channel (PSBCH)). In other words, the UL in the present disclosure may be interpreted as a Sidelink (SL) as appropriate.

The uplink control channel (for example, the PUCCH) may be a channel used for transmission of uplink control information (UCI).

The UCI may include at least one of channel state information (which may be referred to as Channel State Information (CSI)), transmission confirmation information (for example, a Hybrid Automatic Repeat reQuest ACKnowledgement (HARQ-ACK), an ACK/NACK, or the like) and a scheduling request (SR).

For the uplink control channel, a plurality of formats may be supported. Each embodiment of the present disclosure may be applied only to at least one of the plurality of formats.

For each of the plurality of formats, the number of symbols may be defined. For example, a format of a first period (for example, a symbol length) and a format of a second period, which is a period longer than the first period, may be defined. For example, the format of the first period may be a format (for example, PUCCH formats 0 and 2) of a period of 1 to 2 symbols. For example, the format of the second period may be a format (for example, PUCCH formats 1, 3, and 4) of a period of 4 to 14 symbols.

For each of the plurality of formats, the number of bits of UCI may be defined. For example, a format for transmitting the UCI of a first number of bits and a format for transmitting the UCI of a second number of bits, which is the number of bits larger than the first number of bits, may be defined. For example, the format for transmitting the UCI of the first number of bits may be a format (for example, PUCCH formats 0 and 1) for transmitting the UCI of 2 bits or less. For example, the format for transmitting the UCI of the second number of bits may be a format (for example, PUCCH formats 3, 4, and 5) for transmitting the UCI of the number of bits larger than 2 bits.

Among the plurality of formats, a format to which frequency hopping is applied may be defined (for example, PUCCH formats 1, 3, and 4). The frequency hopping may be intra-slot frequency hopping, or may be inter-slot frequency hopping. The slot may be interpreted as a term indicating any time period (for example, a sub-slot, (a certain number of) symbols, or the like). The frequency hopping may mean that different configurations/indications related to frequency resources are used in one or more certain transmissions. For example, in the intra-slot frequency hopping, transmission in a certain slot may be divided into a plurality of (for example, two) transmissions, and configuration/indication related to frequency resources may be performed for each of the transmissions (for example, the divided transmissions may be transmitted via frequency resources different from each other). For example, in the inter-slot frequency hopping, transmission in a plurality of slots may be divided into a plurality of (for example, two) transmissions, and configuration/indication related to frequency resource may be performed for each of the transmissions (for example, the divided transmissions may be transmitted via frequency resources different from each other).

A sequence used for each of the plurality of formats may be the same or different.

In the present disclosure, the uplink control channel may include a demodulation reference signal (DMRS) for the uplink control channel.

The uplink control channel (the UCI transmitted therein) in the present disclosure may be aperiodically transmitted (dynamically scheduled), may be semi-persistently scheduled, or may be periodically transmitted. Each embodiment of the present disclosure may be applied in at least one of cases in which the uplink control channel (the UCI transmitted therein) is aperiodically transmitted, semi-persistently scheduled, and periodically transmitted.

The uplink shared channel (for example, the PUSCH) may be a channel used for transmission of at least one of a data signal and uplink control information (UCI). The uplink shared channel (for example, the PUSCH) may be a channel for transmitting a message (message 3) corresponding to a random access response.

For repetition transmission (repetition) of the uplink shared channel, a plurality of types may be defined. For example, for the repetition transmission of the uplink shared channel, repetition transmission types A and B described above may be defined. Each embodiment of the present disclosure may be applied to a specific repetition transmission type (for example, at least one of repetition transmission type A and repetition transmission type B).

In the present disclosure, the uplink shared channel may include at least one of a demodulation reference signal (DMRS) for the uplink shared channel and a phase tracking reference signal (PTRS) for the uplink shared channel.

In the present disclosure, the uplink shared channel may be dynamically scheduled, or may be semi-statically scheduled using higher layer signaling, or using higher layer signaling and physical layer signaling.

For example, a fact that the uplink shared channel is dynamically scheduled may mean that time/frequency resources are indicated using downlink control information (DCI).

For example, the uplink shared channel semi-statically scheduled using only higher layer signaling, or using higher layer signaling and physical layer signaling, may be referred to as an uplink shared channel of a configured grant. For example, the uplink shared channel semi-statically scheduled using higher layer signaling may be an uplink shared channel of configured grant type 1. For example, the uplink shared channel semi-statically scheduled using higher layer signaling and physical layer signaling may be an uplink shared channel of configured grant type 2.

In the present disclosure, the dynamically scheduled uplink shared channel may be referred to as an uplink shared channel of a dynamic grant (DG), a DG PUSCH, or the like. In the present disclosure, the uplink shared channel semi-statically scheduled using higher layer signaling, or using higher layer signaling and physical layer signaling, may be referred to as an uplink shared channel of a configured grant (CG), a CG PUSCH, or the like.

Each embodiment of the present disclosure may be applied to at least one of the uplink shared channel of the DG and the uplink shared channel of the CG (CG type 1/2).

The sounding reference signal (for example, the SRS) may be a signal used for at least one of UL CSI measurement, DL CSI measurement, and beam management.

The sounding reference signal in the present disclosure may be aperiodically transmitted (dynamically scheduled), may be semi-persistently scheduled, or may be periodically transmitted. Each embodiment of the present disclosure may be applied in at least one of cases in which the sounding reference signal is aperiodically transmitted, semi-persistently scheduled, and periodically transmitted.

The sounding reference signal in the present disclosure may be a positioning reference signal (PRS). The positioning reference signal may mean a reference signal used for positioning.

The random access channel (for example, the PRACH) may be a channel used for transmission of a random access preamble in a random access (initial access) procedure.

The sidelink control channel (for example, the PSCCH) and the sidelink shared channel (for example, the PSSCH), the sidelink feedback channel (for example, the PSFCH), the sidelink synchronization signal (for example, the S-PSS or the S-SSS), and the sidelink broadcast channel (for example, the PSBCH) may be channels used for C-V2X (cellular-vehicle-to-everything) communication, for example. The sidelink control channel may be a channel used for at least one of allocation, indication, and notification of the sidelink shared channel, and transmission of control information may be performed thereon. The sidelink shared channel may be a channel used for sidelink data transmission, and transmission of user data (for example, a transport block) or control information may be performed thereon. The sidelink feedback channel may be a channel used for transmission of information (for example, a HARQ-ACK) related to success or failure in reception of the sidelink shared channel. The sidelink synchronization signal and the sidelink broadcast channel may be a signal and a channel, respectively, used for synchronization between terminals for performing sidelink communication.

In the present disclosure, a channel and a signal may be interchangeably interpreted. In the present disclosure, transmission of a UL channel/signal may be simply referred to as "UL transmission". In the present disclosure, reception of a DL channel/signal may be simply referred to as "DL reception".

In the present disclosure, A/B may mean at least one of A and B. In the present disclosure, "A/B/C" may mean "at least one of A, B, and C".

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be downlink control information (DCI), for example.

Note that, in the present disclosure, a port, an antenna, an antenna port, a panel, a beam, an Uplink (UL) transmission entity, a transmission/reception point (TRP), spatial relation information, a spatial relation, a state of a transmission configuration indication (TCI or Transmission Configuration Indicator) (a TCI state (TCI-state)), a quasi-co-location (QCL) assumption, a control resource set (CORESET), a PDSCH, a codeword, a base station, a certain antenna port (for example, a demodulation reference signal (DMRS) port), a certain antenna port group (for example, a DMRS port group), a certain group (for example, a code division multiplexing (CDM) group, a certain reference signal group, a CORESET group, a panel group, a beam group, a spatial relation group, or a PUCCH group), and a CORESET pool may be interchangeably interpreted.

In the present disclosure, reception of a DL signal/channel and transmission of a UL signal/channel may be transmitted and received using the same BWP/CC/band/operating band, or may be transmitted and received using different BWPs/CCs/bands/operating bands.

In the following, in each of the drawings of the present disclosure, a structure in one CC will be described. However, the number of resources in the frequency direction is not limited to this, and a plurality of CCs may be used. In other words, XDD may be employed within a carrier (Intra-carrier), or may be employed among carriers (a plurality of carriers, Inter-carrier).

In the present disclosure, a BWP, a CC, a cell, a serving cell, a band, a carrier, an operating band, a PRG, a PRB, an RB, an RE, and a resource may be interchangeably interpreted.

In the present disclosure, "A and B overlap", and "at least a part of A overlaps at least a part of B" may be interchangeably interpreted.

Note that each embodiment of the present disclosure may be applied under a condition of at least one of a case in which the UE reports a UE capability corresponding to at least one function/capability in each embodiment to a NW and a case in which a UE capability corresponding to at least one function/capability in each embodiment is configured/activated/indicated for the UE via higher layer signaling. Each embodiment of the present disclosure may be applied in a case in which a specific higher layer parameter is configured/activated/indicated for the UE.

In the present disclosure, a time domain (period/part) in which DL resources and UL resources in a certain number of CCs of a TDD band are simultaneously available, an XDD part, an XDD period, an XDD structure, a first DL/UL part, a first period, a period in which DL reception/UL transmission is limited, a period in which the DL and the UL coexist, and a period in which UL transmission can be performed in a DL period may be interchangeably interpreted.

The DL/UL resource in the XDD part may be interchangeably interpreted as an XDD DL/UL resource, an XDD DL/UL, a first DL/UL resource, and a first DL/UL part. The DL/UL resource in which the DL and the UL of the TDD band do not overlap in terms of time may be interchangeably interpreted as a non-XDD DL/UL resource, a pure DL/UL resource, a DL/UL resource of other than XDD, a second DL/UL resource, a second DL/UL part, a second period, or the like. The XDD operation may indicate operation in a period in which the XDD DL/UL resources are configured, or may indicate overall operation of TDD in which XDD may be used.

In the present disclosure, a DL/UL BWP in a TDD band, a DL/UL BWP defined before Rel. 15/16, and a normal DL/UL BWP may be interchangeably interpreted.

In the present disclosure, the XDD part may mean at least one of the time resources used when UL resources are configured in the same time resources as DL resources and the time resources used when DL resources are configured in the same time resources as UL resources. The XDD part may mean at least one of the time resources used when FL resources (resources available for the DL and the UL) are configured in the same time resources as DL resources and the time resources used when FL resources (resources available for the DL and the UL) are configured in the same time resources as UL resources.

In the present disclosure, drop, stop, cancel, puncture, rate match, postpone, and the like may be interchangeably interpreted.

The structure of XDD may be configured for/notified to the UE, using higher layer signaling. For configuration/notification of the XDD structure, a specific higher layer parameter (RRC information element) may be used.

For example, for configuration/notification of the XDD structure, an RRC information element of the TDD configuration may be used.

In the present disclosure, configuration/notification of the XDD structure using higher layer signaling may be interpreted as semi-static configuration/notification of XDD.

The structure of XDD may be indicated/changed for the UE, using physical layer signaling (for example, DCI). For indication of the structure of XDD, a specific DCI format may be used.

The specific DCI format may be a DCI format (for example, DCI format 2_0) for indicating a format of slots (slot format), or may be another DCI format, for example. The slot format may be information indicating a transmission direction in slots.

In the present disclosure, indication/change of the XDD structure using physical layer signaling may be interpreted as dynamic indication/change of XDD.

For the UE, the structure of XDD may be configured/notified/indicated/changed based on at least one of higher layer signaling and physical layer signaling.

A time resource (unit time resource) of a certain size (unit time, time domain granularity) may be referred to as a time unit. A time unit, a subframe, a slot, a sub-slot, and a symbol may be interchangeably interpreted.

A frequency resource (unit frequency resource) of a certain size (unit frequency, frequency domain granularity) may be referred to as a frequency unit. A frequency unit, a BWP, a subband, an RB bundle, an RB, and a subcarrier may be interchangeably interpreted.

A frequency-time resource (unit resource) having a frequency resource (unit frequency resource) of a certain size (unit frequency, frequency domain granularity) and a time resource (unit time resource) of a certain size (unit time, time domain granularity) may be referred to as a frequency-time unit.

One or more frequency-time units, all of which are for the downlink (DL), may be referred to as a pure DL unit or a DL unit. One or more frequency-time units, all of which are for the uplink (UL), may be referred to as a pure UL unit or a UL unit. The pure DL unit and the pure UL unit (one or more frequency-time units including only one link direction) may be referred to as a pure unit.

When one or more frequency-time units in a certain time unit are all for the DL, the time unit may be referred to as a pure DL time unit or a DL time unit. When one or more frequency-time units in a certain time unit are all for the UL, the time unit may be referred to as a pure UL time unit or a UL time unit. The pure DL time unit and the pure UL time unit (time unit including only one link direction) may be referred to as a pure time unit.

When one or more frequency-time units in a certain frequency unit are all for the DL, the frequency unit may be referred to as a pure DL frequency unit or a DL frequency unit. When one or more frequency-time units in a certain frequency unit are all for the UL, the frequency unit may be referred to as a pure UL frequency unit or a UL frequency unit. The pure DL frequency unit and the pure UL frequency unit (frequency unit including only one link direction) may be referred to as a pure frequency unit.

When a certain time unit includes the frequency-time unit for the DL and the frequency-time unit for the UL, the time unit may be referred to as an XDD time unit, a flexible time unit, a coexisting time unit, a special time unit, a special time resource, a time resource applicable to the uplink and the downlink, or the like.

When a certain frequency unit includes the frequency-time unit for the DL and the frequency-time unit for the UL, the frequency unit may be referred to as an XDD frequency unit, a flexible frequency unit, a coexisting frequency unit, a special frequency unit, a special frequency resource, or the like.

At least one of one or more frequency-time units including the frequency-time unit for the DL and the frequency-time unit for the UL (two link directions) and one or more frequency-time units including the frequency-time unit in which the link direction is indicated as flexible (F) or XDD (F) may be referred to as an XDD unit, a flexible unit, a coexisting unit, a special unit, a special resource, or the like.

In the present disclosure, the slot format for the time/frequency/frequency-time unit may indicate at least one of D, U, F, and X. X may indicate an XDD unit/XDD time unit/XDD frequency unit.

In the present disclosure, a slot format, a unit format, a frequency-time unit format, an XDD time unit format, and an XDD format may be interchangeably interpreted.

### <First Embodiment>

When the XDD structure is semi-statically configured/notified, the UE need not perform UL transmission in frequency resources in a first DL part in the same time resources as a first UL part.

The XDD structure may be configured/determined using higher layer signaling and need not be dynamically indicated/changed. The UE may assume that the XDD structure is configured/determined using higher layer signaling and is not dynamically indicated/changed.

The UE may perform UL transmission in frequency resources in which both of DL reception and UL transmission can be performed in the same time resources as the first UL part.

The UE may drop at least a part of UL transmission that is configured/indicated/scheduled across the frequency resources of the first UL part and the frequency resources of the first DL part.

For example, the UE may drop all of the UL transmission that is configured/indicated/scheduled across the frequency resources of the first UL part and the frequency resources of the first DL part.

For example, the UE may drop a part of the UL transmission that is configured/indicated/scheduled across the frequency resources of the first UL part and the frequency resources of the first DL part. In this case, the UE may drop a part of the UL transmission in the frequency resources that cannot be transmitted (the frequency resources of the first DL part), and perform the rest of the UL transmission in the frequency resources that can be transmitted (the frequency resources of the first UL part).

The frequency resources of the first UL part may be defined/configured based on the UL BWP. The frequency resources of the first UL part may be configured with a specific higher layer parameter. The frequency resources of the first UL part may be defined in a specification in advance.

For example, the frequency resources of the first UL part may be configured based on at least one of a frequency band, a bandwidth, and a subcarrier spacing.

The dropped UL transmission described above may be transmission configured using higher layer signaling.

The configured transmission may be, for example, at least one of transmission of a periodic UL channel/signal, transmission of a UL channel/signal using a configured grant, semi-persistent transmission (SPT) of a UL channel/signal, and repetition transmission of a UL channel/signal.

The transmission of a periodic UL channel/signal may be, for example, transmission of periodic CSI on a PUCCH, transmission of a periodic SRS, or the like.

The UL channel/signal using a configured grant may be, for example, a configured grant PUSCH. The configured grant PUSCH may be one of type 1 and type 2, and transmission immediately after activation or deactivation in type 2 may or may not be included.

When UL transmission including resources of the first DL part is configured/indicated/scheduled, the UE may drop a part or all of the UL transmission, despite the fact that the UL transmission is UL transmission using dynamic scheduling (based on downlink control information). This is preferable for a case in which the UE assumes that PUCCH resources or the like not intended by a network (the NW, for example, the base station) have been indicated due to a detection error of DCI (DL assignment) or the like, for example.

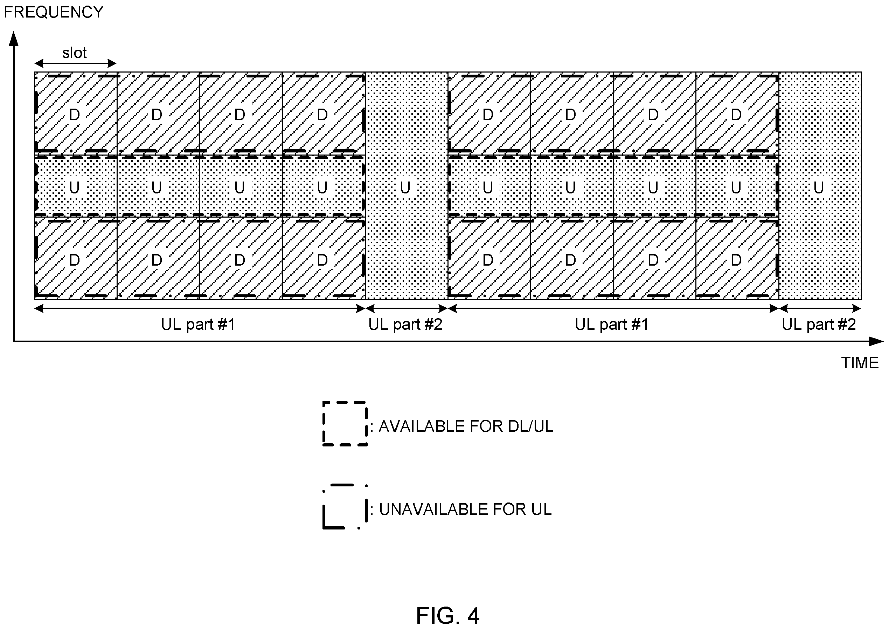

FIG. 4 is a diagram to show an example of resources available for UL transmission according to a first embodiment. In the example shown in FIG. 4, the structure of XDD includes UL part #1 of the same time resources as DL resources, which is made up of four slots, and UL part #2 of only the UL, which is made up of one slot. In FIG. 4, the XDD structure is repeated twice.

In the example shown in FIG. 4, the UE need not perform UL transmission in the DL resources in UL part #1. In contrast, the UE may perform at least one of DL reception and UL transmission in the UL resources in UL part #1.

Note that the XDD structure, the available resources in the DL/UL, and the unit of the time resources (for example, slots in FIG. 4) in each of the drawings of the present disclosure are merely examples, and are not limited to the examples shown in the present disclosure.

### <<Variation of First Embodiments

The first embodiment may be applied when the UL resources configured in the same time resources as the DL resources (XDD structure) are configured as FL resources (FL parts).

The first embodiment may be applied when monitoring of the PDCCH for the DCI format for indicating the slot format is not configured for the UE.

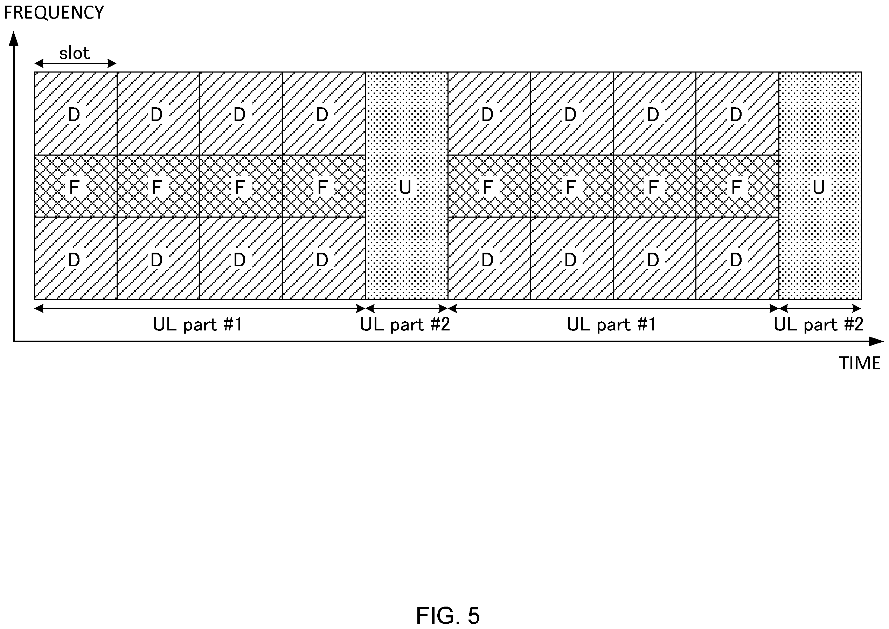

FIG. 5 is a diagram to show an example of the XDD structure according to a variation of the first embodiment. In the example shown in FIG. 5, the structure of XDD includes UL part #1 of the same time resources as DL resources, which is made up of four slots, and UL part #2 of only the UL, which is made up of one slot. In FIG. 5, the XDD structure is repeated twice.

In FIG. 5, resources of UL part #1 in which UL transmission can be performed are configured/indicated as flexible parts.

The first embodiment may be applied also when frequency hopping is applied to UL transmission in the first UL part. For example, when frequency hopping is applied to UL transmission in the first UL part and UL transmission after frequency hopping (for example, second hopping) overlaps DL resources, the UE may drop the UL transmission after the hopping. For example, even when frequency hopping is applied to UL transmission in the first UL part and UL transmission after frequency hopping (for example, second hopping) overlaps DL resources, the UE need not drop the UL transmission after the hopping, on the condition that the UL transmission is dynamically scheduled.

At least one of configuration of frequency hopping and configuration of a size of a resource block group (RBG) may be separately configured between the first UL part and the second UL part.

According to the first embodiment described above, UL transmission not intended by the NW can be avoided, and occurrence of influence on other bands can be avoided.

### <Second Embodiment>

In a second embodiment, for the UE, the XDD structure may be semi-statically configured and dynamically indicated/changed.

In the second embodiment, for the UE, the semi-statically configured XDD structure may be configured based on the flexible (FL) resources (slot).

Note that the present disclosure will describe an example of a case in which the time unit used for XDD is a slot. However, the time unit is not limited to a slot, and may be interpreted as any time unit, such as a symbol and a sub-slot.

In the semi-static configuration, for example, the FL resources may be configured in the first UL part. The FL resources may be resources in which resources of only the XDD structure or the DL may be applied. Then, application of at least one of resources of only the XDD structure and the DL to the FL resources may be indicated for the UE, using physical layer signaling.

For example, the physical layer signaling may be a DCI format for indicating a slot format, may be a DCI format for scheduling DL reception/UL transmission, or may be any other DCI format.

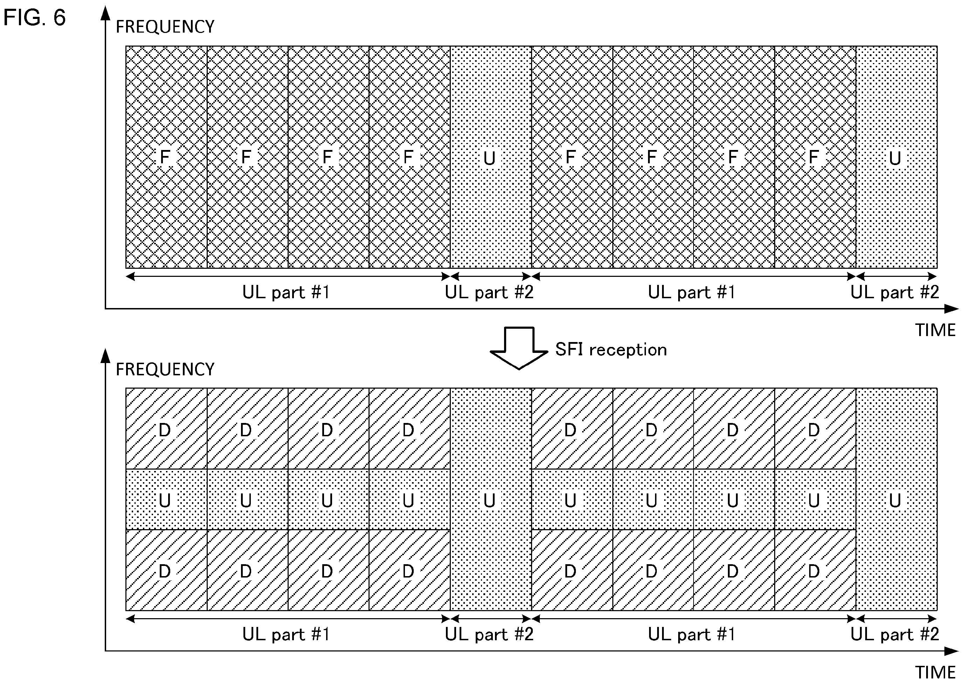

FIG. 6 is a diagram to show an example of configuration/indication of the XDD structure according to the second embodiment. In FIG. 6, for the UE, information related to the XDD structure (information related to the FL resources) is configured using higher layer signaling. In FIG. 6, the UE determines whether each of the FL resources is the XDD part, using a slot format indication (SFI) field included in the DCI format for indicating the slot format.

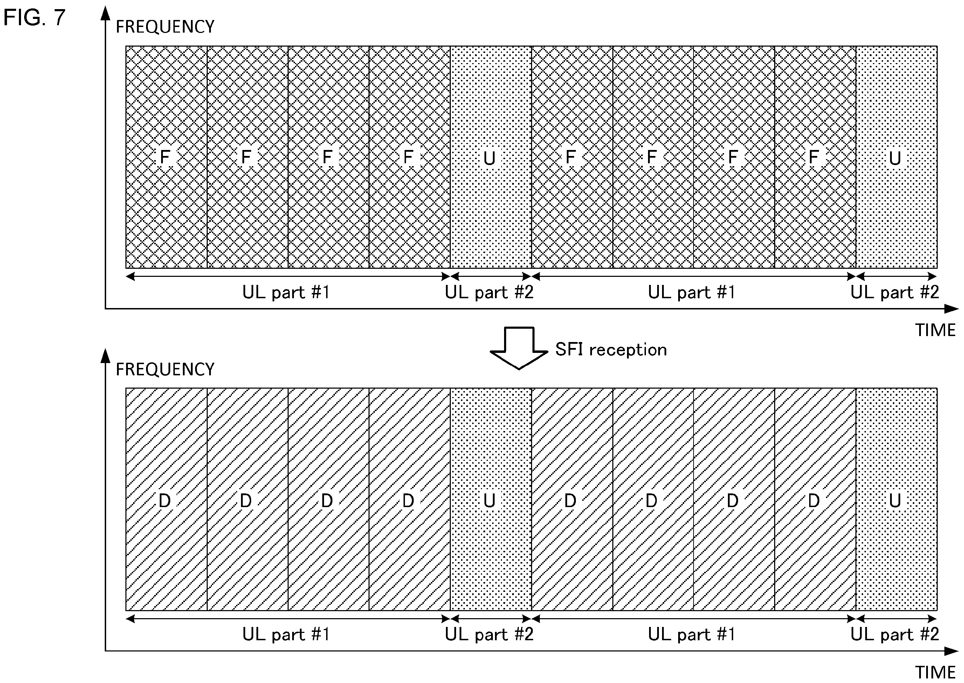

FIG. 7 is a diagram to show another example of configuration/indication of the XDD structure according to the second embodiment. In FIG. 7, for the UE, information related to the XDD structure (information related to the FL resources) is configured using higher layer signaling. In FIG. 7, the UE determines whether each of the FL resources is a resource of only the DL, using a slot format indication (SFI) field included in the DCI format for indicating the slot format.

In the second embodiment, the UE may assume that the UE receives the DCI format for indicating the slot format in each PDCCH monitoring occasion related to reception of the DCI format.

In the second embodiment, when the UE receives the DCI format for indicating the slot format in an n-th monitoring occasion out of PDCCH monitoring occasions related to reception of the DCI format, the UE may determine that information related to the received DCI format is valid until a timing related to an (n+k)-th (k is any natural number, e.g., 1) monitoring occasion.

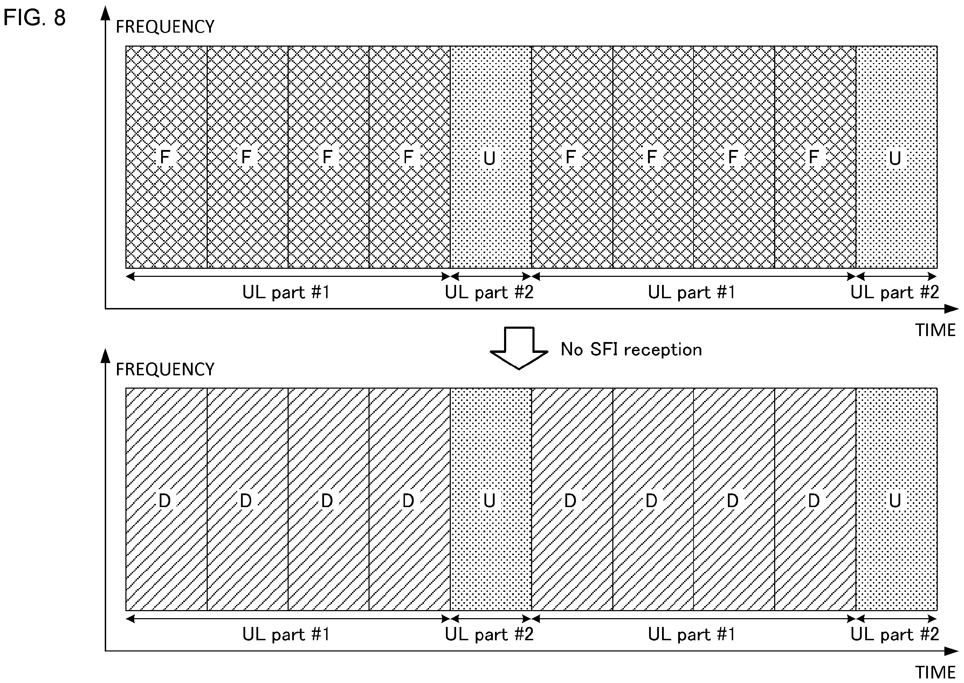

In the second embodiment, when the UE does not receive the DCI format for indicating the slot format in the PDCCH monitoring occasion related to reception of the DCI format, the UE may determine/assume that the first UL part (FL resources) is made up of resources of only the DL (see FIG. 8).

When the UE does not receive the DCI format for indicating the slot format in the PDCCH monitoring occasion related to reception of the DCI format and determines/assumes that the first UL part (FL resources) is made up of resources of only the DL, the UE may perform UL transmission using dynamic scheduling in the first UL part.

When the UE does not receive the DCI format for indicating the slot format in the PDCCH monitoring occasion related to reception of the DCI format and determines/assumes that the first UL part (FL resources) is made up of resources of only the DL, the UE need not perform transmission configured using higher layer signaling in the first UL part.

When the UE does not receive the DCI format for indicating the slot format in the PDCCH monitoring occasion related to reception of the DCI format and determines/assumes that the first UL part (FL resources) is made up of resources of only the DL, the UE may drop a part or all of UL transmission when the UL transmission is configured/indicated/scheduled in the DL resources of the first UL part despite the fact that the UL transmission is UL transmission using dynamic scheduling. This is preferable for a case in which the UE assumes that PUCCH resources or the like not intended by a network (the NW, for example, the base station) have been indicated due to a detection error of DCI (DL assignment) or the like, for example.

When the UE receives the DCI format for indicating the slot format in the PDCCH monitoring occasion related to reception of the DCI format and a specific field (for example, the SFI field) of the DCI format indicates the XDD structure, the first embodiment described above may be applied.

Note that, in the present disclosure, "when not receiving the DCI format for indicating the slot format in the PDCCH monitoring occasion related to reception of the DCI format" may be interpreted as "before receiving the DCI format for indicating the slot format".

According to the second embodiment described above, even when an error occurs in reception of the downlink control information, UL transmission not intended by the NW can be avoided, and occurrence of influence on other bands can be avoided.

### <Third Embodiment>

In a third embodiment, transmission of the uplink control channel in the XDD structure will be described.

### <<Embodiment 3-1>>

For the UE, a PUCCH resource set to be used for corresponding HARQ-ACK multiplexing (mapping) and HARQ-ACK feedback may be indicated using downlink control (DL assignment) for scheduling a downlink shared channel (for example, a PDSCH). The HARQ-ACK feedback may mean HARQ-ACK transmission or HARQ feedback.

The UE may use the indicated PUCCH resources, regardless of a payload size of uplink control information to be multiplexed.

When the PUCCH resource set determined based on the payload size of the uplink control information to be multiplexed and the indicated PUCCH resource set are different, the UE need not transmit (may drop) the PUCCH.

According to Embodiment 3-1, a case in which a PUCCH resource set not intended by the NW is used can be avoided, and use of frequency resources not intended by the NW can be avoided, which may be caused due to a detection error of the PDCCH or the like.

### <<Embodiment 3-2>>

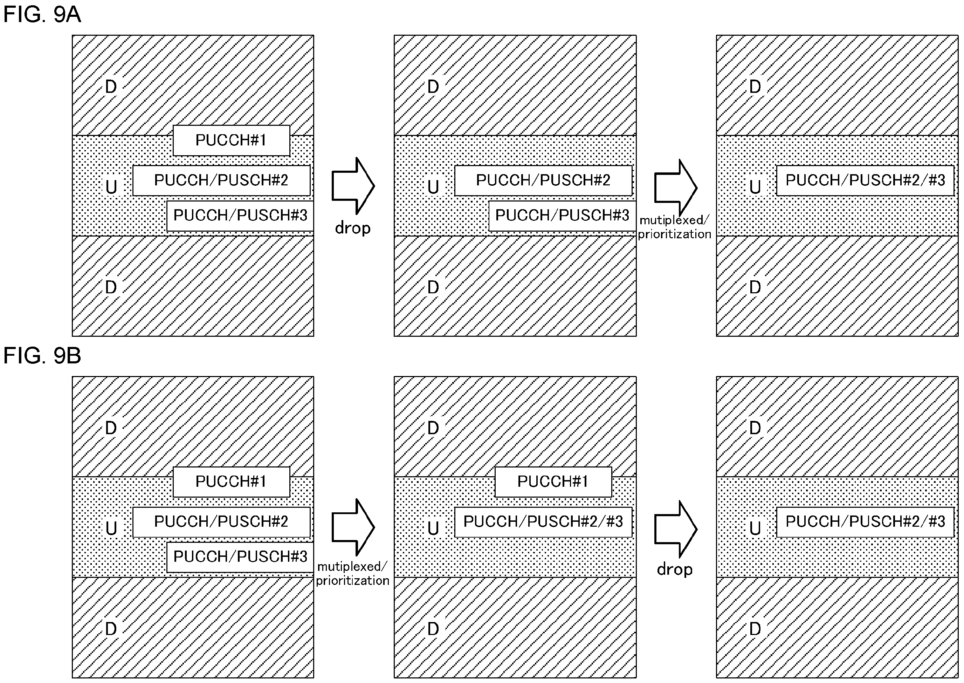

When PUCCH resources are configured in DL frequency resources in the same time resources as the first UL part and there are PUSCH/PUCCH resources overlapping the configured PUCCH resources in the time resources/frequency resources, the UE may drop the configured PUCCH resources before operation of at least one of multiplexing/prioritization with the overlapping PUSCH/PUCCH resources (see FIG. 9A).

When PUCCH resources are configured in DL frequency resources in the same time resources as the first UL part and there are PUSCH/PUCCH resources overlapping the configured PUCCH resources in the time resources/frequency resources, the UE may perform operation of at least one of multiplexing/prioritization with the overlapping PUSCH/PUCCH resources before dropping the configured PUCCH resources (see FIG. 9B).

According to Embodiment 3-2, even when the XDD structure is used, operation regarding overlapping of UL transmission can be clarified, the NW can correctly perform reception processing of a UL channel/signal, and UL transmission in DL resources can be avoided.

### <<Embodiment 3-3>>

When the UE performs (has performed) UL transmission in certain time resources in the first UL part, the UE may generate a HARQ-ACK bit for reception of a potential PDSCH in the time resources in generation of a semi-static HARQ-ACK codebook (for example, a type 1 HARQ-ACK codebook). The generated bit may be a negative response (NACK).

When the UE performs (has performed) UL transmission in certain time resources in the first UL part, the UE need not generate a HARQ-ACK bit for reception of a potential PDSCH in the time resources in generation of a semi-static HARQ-ACK codebook.

Note that, in the present disclosure, the potential PDSCH may mean PDSCH reception, which may be executed based on configuration related to PDSCH reception and configuration related to corresponding HARQ-ACK transmission. The configuration related to PDSCH reception may be configuration used for a time domain resource assignment field, for example, and may be configuration related to at least one of a slot offset, a start and length indicator (SLIV), a start symbol and allocation length, and a PDSCH mapping type. The configuration related to HARQ-ACK transmission may be configuration used for a PDSCH-to-HARQ _feedback timing indicator field, for example, and may be configuration related to a time offset from PDSCH reception to HARQ-ACK transmission. The configuration related to HARQ-ACK transmission may be configuration used for a PUCCH resource indicator field, and may be configuration related to PUCCH resources.

According to Embodiment 3-3, by clearly performing determination of a payload size in feedback of HARQ-ACK, a case in which a PUCCH resource set not intended by the NW is used can be avoided, and use of frequency resources not intended by the NW can be avoided.

According to the third embodiment described above, even when transmission of an uplink control channel in the XDD structure is performed, transmission not intended by the NW can be avoided, and occurrence of influence on other bands can be avoided.

### <Additional Notes>

In the configuration (structure) of XDD, the UE may assume that first time resources and second time resources are configured. The first time resources may be time resources of the XDD part. The second time resources may be time resources of a part not being the XDD part.

Frequency resources available for the UL in the first time resources may be defined as a part of frequency resources available for the UL in the second time resources.

The frequency resources available for the UL in the first time resources may be configured being sandwiched between frequency resources unavailable for the UL in the first time resources. Alternatively, the frequency resources available for the UL in the first time resources may be configured to sandwich the frequency resources unavailable for the UL in the first time resources.

The frequency resources unavailable for the UL in the first time resources may be resources available for the DL.

In the configuration (structure) of XDD, a plurality of TDD configurations may be received for a certain cell. For example, as a structure for each specific time unit (for example, a slot), regarding five slots, "DDDSU" and "UUUUU" are configured for the UE. In this case, "D" indicates that the slot is of the downlink, "U" indicates that the slot is of the uplink, and "S" indicates that the slot is a special slot (which can be used for both of the UL and the DL, for example). In this case, the UE may determine that slots in which "D and U" and "D and S" are configured are the XDD part, and a slot in which only "U" is configured is a part not being the XDD part.

The slot format indication for the XDD structure may conform to a method described below.

### <<Slot Format Indication>>

For XDD, the slot format indication may be extended to a frequency-time domain indication.

Time domain granularity may be the same as that in Rel-15/16 NR. In other words, time domain granularity may be at slot/symbol level. The size (duration) of the time domain (resources therein to which the slot format indication is applied) indicated by the slot format indication may be indicated by a length of the slot format indication, or may be indicated by a period. The period may be configured with an RRC IE.

Frequency domain granularity may be at resource block (RB)/RB bundle/subband level. The size (band) of the frequency domain (resources therein to which the slot format indication is applied) indicated by the slot format indication may be a cell (CC)/BWP.

The slot format indication need not support an indication of "flexible"(F) for the frequency-time unit (option 1), or may support the indication (option 2). In option 1, the slot format indication may indicate D or U for the frequency-time unit. In option 2, the slot format indication may indicate D, U, or F for the frequency-time unit.

The slot format indication may be one of the following alternatives 1 and 2.

### [Alternative 1] One-level indication

The indication of D/U/(F) for the frequency-time unit is in frequency-first or time-first order.

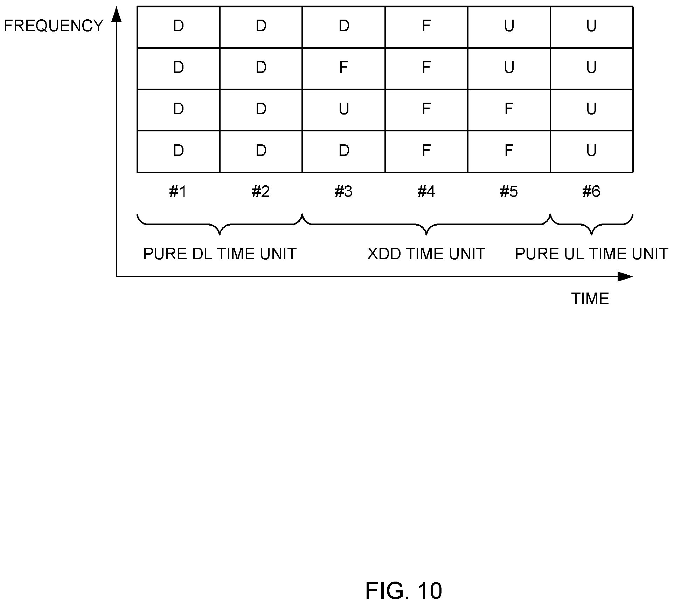

Regarding the example of FIG. 10, the slot format indication using the frequency-first order of alternative 1 is "DDDDDDDDDFUDFFFFUUFFUUUU".

### [Alternative 2] Two-level indication

At a first level, a one-dimensional (time-domain or frequency-domain) indication is performed, and at a second level, two-dimensional indication based on the one-dimensional indication is performed. The first level indication may be an indication for each time unit. The second level indication may be an indication for the frequency-time unit in the XDD time unit. The second level indication may be in frequency-first or time-first order, similarly to alternative 1. In alternative 2, signaling overhead can be reduced in comparison to alternative 1.

Regarding the example of FIG. 10, the first level indication of alternative 2 is "DDXXXU", and the second level indication using the frequency-first order is"DFUDFFFFUUFF".

The slot format indication may use an indication method of at least one of semi-static (semi-statically) configuration using RRC, indication using a MAC CE, and dynamic indication using an existing or new DCI format.

The two-level indication may use different indication methods for the two levels. For example, the first level indication may use the semi-static configuration using RRC, and the second level indication may use the dynamic indication using DCI. The first level indication may indicate a length of the DL time unit/UL time unit/XDD time unit, using the number of slots/number of symbols. For example, the first level indication may indicate a first DL time unit and a last UL time unit within a certain time period (period). The XDD time unit may be present between the DL time unit and the UL time unit.

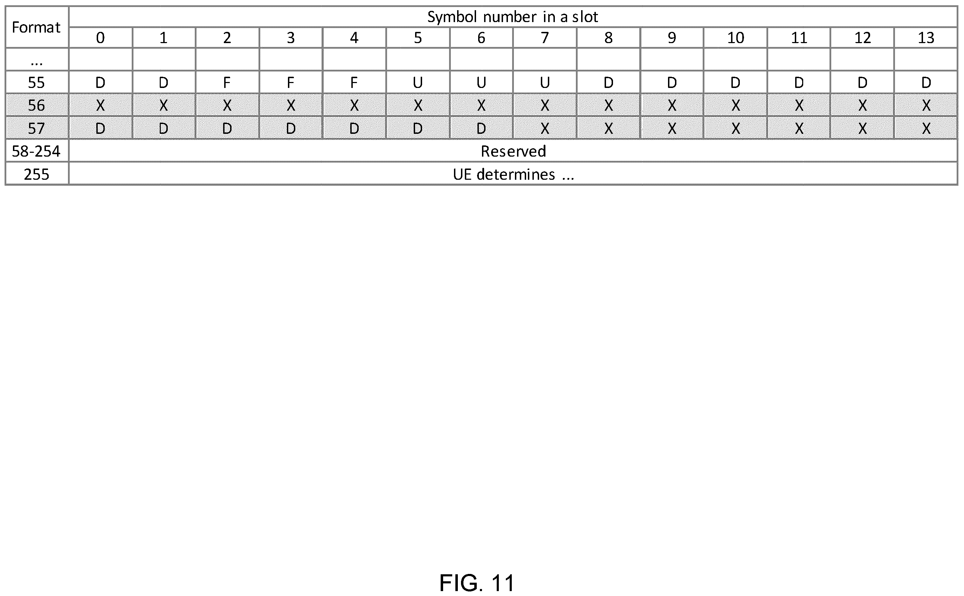

As described above, when the XDD structure is indicated using the DCI format for indicating the slot format, XDD may be indicated using at least one of reserved fields (for example, formats 56 to 254) included in an association between existing slot formats (for example, defined in Rel. 15/16) and transmission directions corresponding to symbol numbers in a slot (see FIG. 11). In the example shown in FIG. 11, "X" indicates that a corresponding slot has the XDD structure.

Note that, although each embodiment of the present disclosure describes transmission of a UL channel/signal, each embodiment of the present disclosure may also be applied to reception of a DL channel/signal as appropriate. In the present disclosure, transmission of a UL channel/signal and reception of a DL channel/signal may be interchangeably interpreted. In the present disclosure, the uplink (UL) may be interchangeably interpreted as the downlink (DL).

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

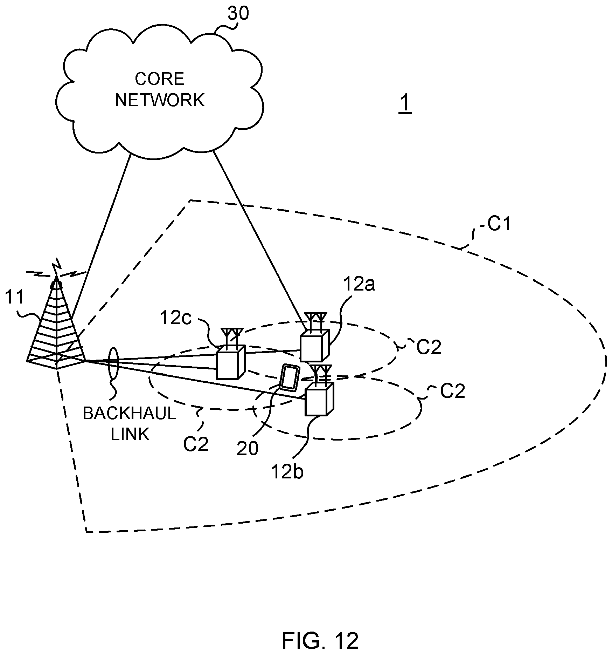

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

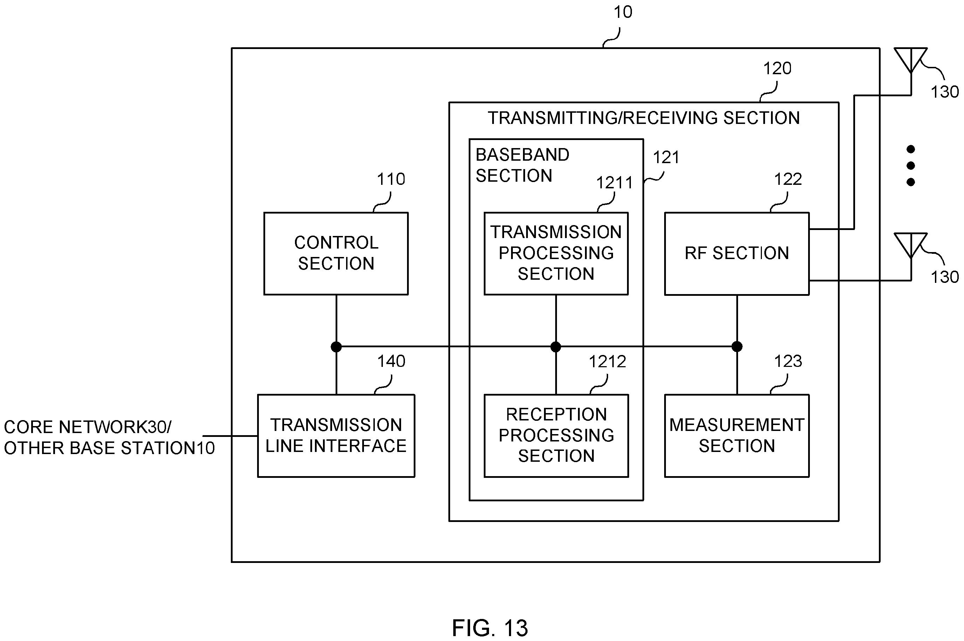

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a Radio Resource Control (RRC) information element related to a structure of frequency and time in a duplex method of performing frequency division multiplexing of an uplink (UL) resource and a downlink (DL) resource in one or more component carriers in a band of time division duplex (TDD), and transmit downlink control information including a field related to an indication of a transmission direction in the structure. The control section 110 may indicate at least one of configuration of the DL resource and the UL resource to be multiplexed by frequency division multiplexing and configuration of only the DL resource, using the field, regarding a period available for a DL and a UL configured based on the RRC information element.

### (User Terminal)

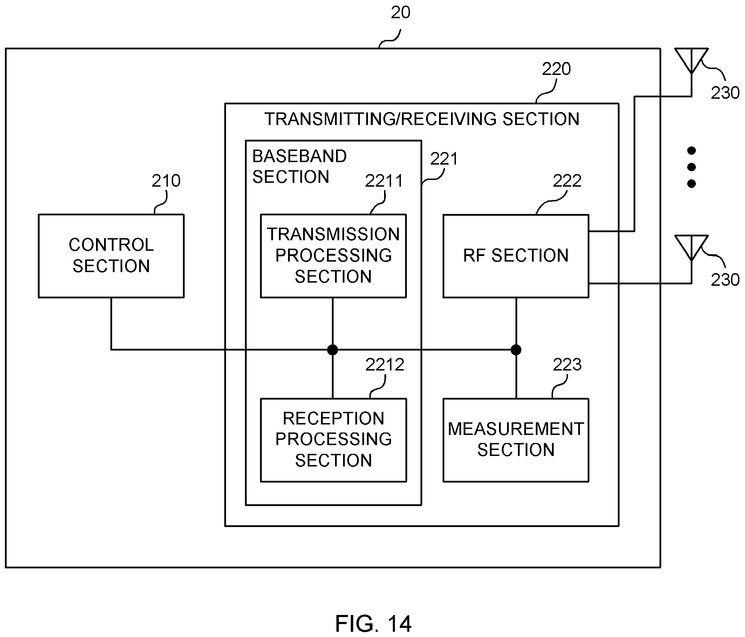

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a Radio Resource Control (RRC) information element related to a structure of frequency and time in a duplex method of performing frequency division multiplexing of an uplink (UL) resource and a downlink (DL) resource in one or more component carriers in a band of time division duplex (TDD), and receive downlink control information including a field related to an indication of a transmission direction in the structure. The control section 210 may determine at least one of configuration of the DL resource and the UL resource to be multiplexed by frequency division multiplexing and configuration of only the DL resource, based on the field, regarding a period available for a DL and a UL configured based on the RRC information element.

The control section 210 may perform control not to perform transmission of at least one of a UL channel and a UL signal in the DL resource.

The control section 210 may perform control not to perform transmission of at least one of a UL channel and a UL signal configured using higher layer signaling, and perform control to perform transmission of the UL channel and the UL signal scheduled using the downlink control information, in the DL resource.

The at least one of the UL channel and the UL signal configured using the higher layer signaling may be at least one of at least one of a periodic UL channel and a periodic UL signal and at least one of the UL channel and the UL signal using a configured grant.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

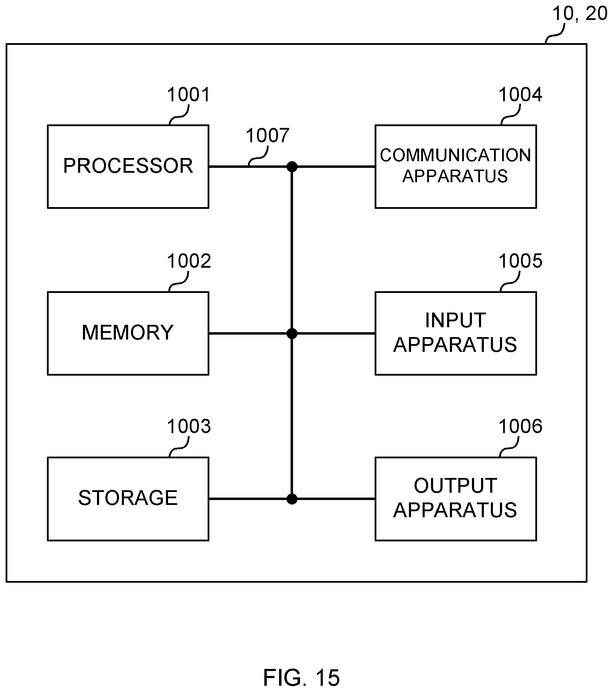

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," a "serving cell," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a Radio Resource Control (RRC) information element related to a structure of frequency and time in a duplex method of performing frequency division multiplexing of an uplink (UL) resource and a downlink (DL) resource in one or more component carriers in a band of time division duplex (TDD), and receives downlink control information including a field related to an indication of a transmission direction in the structure; and
a control section that determines at least one of configuration of the DL resource and the UL resource to be multiplexed by frequency division multiplexing and configuration of only the DL resource, based on the field, regarding a period available for a DL and a UL configured based on the RRC information element.

2. The terminal according to claim 1, wherein
the control section performs control not to perform transmission of at least one of a UL channel and a UL signal in the DL resource.

3. The terminal according to claim 1, wherein
the control section performs control not to perform transmission of at least one of a UL channel and a UL signal configured using higher layer signaling, and performs control to perform transmission of the UL channel and the UL signal scheduled using the downlink control information, in the DL resource.

4. The terminal according to claim 3, wherein
the at least one of the UL channel and the UL signal configured using the higher layer signaling is at least one of at least one of a periodic UL channel and a periodic UL signal and at least one of the UL channel and the UL signal using a configured grant.

5. A radio communication method for a terminal, the radio communication method comprising:
receiving a Radio Resource Control (RRC) information element related to a structure of frequency and time in a duplex method of performing frequency division multiplexing of an uplink (UL) resource and a downlink (DL) resource in one or more component carriers in a band of time division duplex (TDD), and receiving downlink control information including a field related to an indication of a transmission direction in the structure; and
determining at least one of configuration of the DL resource and the UL resource to be multiplexed by frequency division multiplexing and configuration of only the DL resource, based on the field, regarding a period available for a DL and a UL configured based on the RRC information element.

6. A base station comprising:
a transmitting section that transmits a Radio Resource Control (RRC) information element related to a structure of frequency and time in a duplex method of performing frequency division multiplexing of an uplink (UL) resource and a downlink (DL) resource in one or more component carriers in a band of time division duplex (TDD), and transmits downlink control information including a field related to an indication of a transmission direction in the structure; and
a control section that indicates at least one of configuration of the DL resource and the UL resource to be multiplexed by frequency division multiplexing and configuration of only the DL resource, using the field, regarding a period available for a DL and a UL configured based on the RRC information element.
